# EUROPEAN PATENT APPLICATION

(11) **EP 2 330 269 A2**
(43) Date of publication of application: **08.06.2011**
(21) Application number: 10014215.7
(22) Date of filing: 02.11.2010
(51) Int. Cl.: E05D 15/06, E05F 5/00

(54) **Sliding guide for doors of wardrobes provided with damper stop**

(30) Priority: 04.12.2009 IT MI20090400
(71) Applicant: Terno Scorrevoli S.r.l., 20039 Varedo, MI (IT)
(72) Inventor: Terno, Giovanni, 20814 Varedo (MB) (IT)
(74) Representative: Lecce, Giovanni

(57) **Abstract**

A sliding guide (10) for doors of wardrobes provided with damper stop comprising a trolley (10') consisting in a first frame (12) and a second frame (18) shaped like an upturned "U" whereto the upper ends of an outer door (22) and an inner door (24) of a piece of furniture are fixed; the guide comprises, also, a section (26), combined with the trolley (10') provided with two longitudinally extending seats (50-50') and two tracks the upper extremity or head (28) thereof having semicircular section wherealong rollers or bearings (30-32) carried by the frames (12-18) slide. In the sliding guide for doors of wardrobes of the invention thereof the damper stop comprises an air or gas damper (38) fixed outside said seats (50 - 50') of the section (26).

## Description

This invention relates to a sliding guide for doors of wardrobes provided with damper stop.

Namely, this invention relates to a sliding guide for doors of wardrobes, associated to a device especially apt to perform a damped stop locking at least in closed position the doors thereof. Said guide, which allows the achievement of a smooth and without recoil closure of the doors of pieces of furniture, is advantageously provided with means apt to prevent both the accidental overriding of the damper stop, and the potential exit from the sliding tracks of the bearing or rollers moving in rotation on the tracks thereof.

As is known, furniture with sliding doors is currently widespread for both aesthetic and practical reasons. The sliding doors, in fact, do not involve the use of hinges or other metal elements which remain exposed, allowing therefore the achievement of clean and aesthetically pleasant surfaces. Moreover, these doors do not require space for the opening, which is not frontal but cantilevered, and thus substantially reduce the bulk of the furniture. For the sliding movement of the doors, which allows the opening and closing of part of the furniture, there are employed small trolleys, which are fixed in correspondence or in proximity of the upper edge and the lower edge of the doors and which, through bearings or rollers, slide on tracks made on specific metal sections. Said sections, typically in aluminium, are fixed to the bearing frame of the furniture in the upper part thereof and in the lower part and are provided with two parallel running seats for respective doors, inner and outer. The trolleys currently employed for the sliding doors are usually associated to damper devices, which progressively stop the run of the doors during closing. Said devices comprise, according to a common embodiment, one or more silicon pistons interacting with coil springs that operate drawing the door. As an alternative, similar pistons containing more or less dense oily liquids are employed. A solution of this kind is disclosed, for example, in the Italian Patent Application no. MI 2007 A/70007 in the name of the Applicant hereof, wherein the device is placed as a whole within the metal section.

However it has been noted that the damper devices of the type hereinbefore described can show, under certain operating conditions, significant drawbacks, capable to jeopardise the correct operation of the sliding guide as a whole. In fact, the fluid contained in the pistons is severely affected by the temperature of the room wherein the furniture is placed; if the temperature is low, as can occur in certain periods of the year and in absence of heating, the fluid of the pistons thickens and their movements becomes slow and difficult. In some cases, the pistons are not able to cover the whole stroke, with the consequence that the door is not completely closed.

In presence of high temperatures, the fluid of the pistons becomes less dense, with the consequence that it causes leaks or losses coming out from the enclosure because of its liquefaction. In this case as well, therefore, severe drawbacks occur, given that the fluid leaked from the piston can soil the section wherein the device is integrated and the piston thereof can easily lose the gradual damping effect against the door.

Moreover, in the known sliding guides hereof the door that reaches the end of travel during opening easily produces an annoying noise, caused by the collision between the parts which roughly come to contact; this occurs in particular in the common case where the damper device is provided on one side only, that is during closing. Beyond the annoyance caused by noise, the constant recurring of a situation of this kind can produce, because of the recoils or vibrations, undesired plays on the moving parts with the resulting danger of malfunctioning.

The object of the present invention is to obviate the drawbacks mentioned hereinabove.

More in particular, the object of this invention is to provide a sliding guide for doors of wardrobes wherein the damper device associated to the guide thereof is able to operate without drawbacks in any environmental condition, that is in presence of low or high temperatures.

A further object of the invention is to provide a sliding guide for doors of wardrobes apt to avoid noisy and violent abutments between the moving parts, in presence of a damper device or a damper stop which is activated only during the closing of the door. A further object of the invention is to provide a sliding guide for doors of wardrobes wherein are arranged means apt to prevent both the accidental overriding of the damper stop and the potential exit from the sliding tracks of the bearing or rollers moving in rotation on the tracks thereof.

A further object of the invention is to provide the users with a sliding guide for doors of wardrobes provided with damper stop apt to ensure a high level of resistance and reliability over time and apt as well to be easily and inexpensively constructed.

These and yet other objects are achieved by the sliding guide for doors of wardrobes of the present invention according to the main claim.

The construction and functional features of the sliding guide for doors of wardrobes of this invention shall be better understood from the following detailed description, wherein reference is made to the annexed drawings showing some preferred and non-limiting embodiments thereof, and wherein:
figure 1 schematically shows a perspective view of the sliding guide for doors of wardrobes with the damper stop devices;
figure 2 schematically shows an exploded view of the sliding guide thereof;

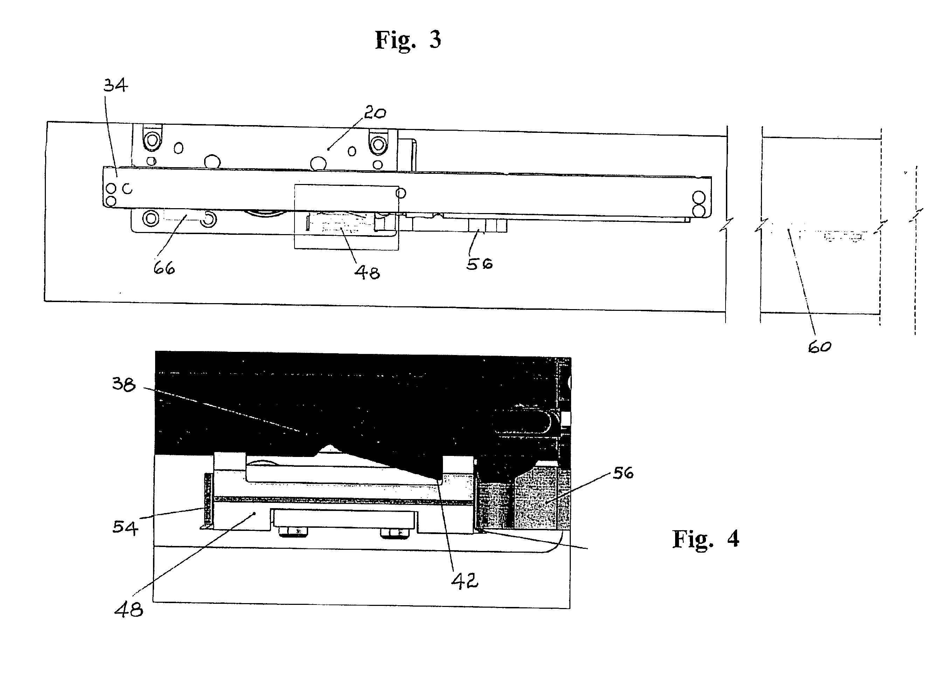

figure 3 schematically shows a front view of the sliding guide thereof;
figure 4 is a partial enlargement of figure 3;
figure 5 schematically shows a cross section of the guide thereof;
figure 6 schematically shows an exploded and partial view of the sliding guide thereof;
figure 7 is a similar view to that of figure 3;
fig. 8 shows the plan view of the guide of figure 7;
figures from 9 to 12 schematically show a perspective and detail view of as many component of the sliding guide of the invention thereof;
figures 13 and 14 schematically show, in lateral and plan view, the damper stop in the condition found when the door is open;
figures 15 and 16 schematically show, in lateral and plan view, the damper stop in the condition found when the door is closed;

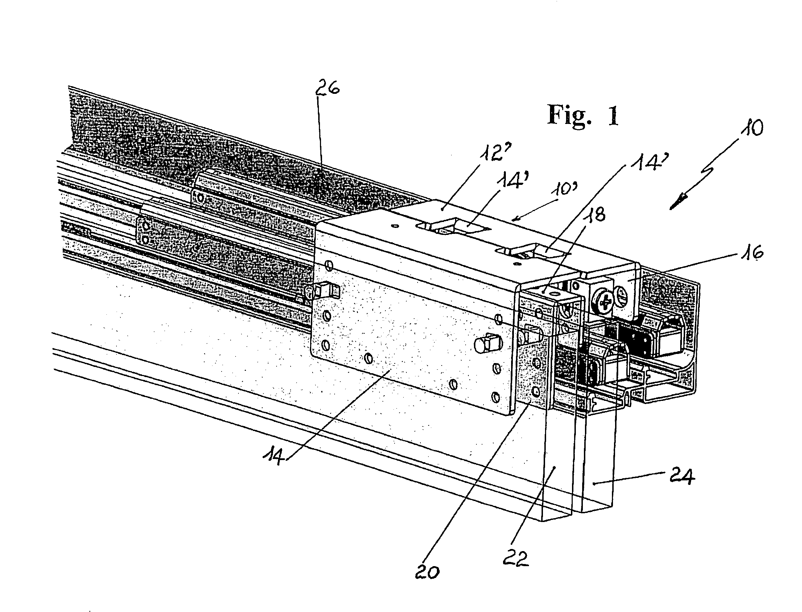

With initial reference to figure 1, the sliding guide for doors of wardrobes of the present invention, globally indicated with 10 in figure 1, comprises a per se known trolley 10', consisting in a first frame 12 shaped like an upturned "U", wherein the opposite and reciprocally parallel vertical walls 14 and 16 have different heights. Said trolley comprises a second frame 18, equally shaped like an upturned "U" and having a lower width than the first.

The second frame is arranged underneath the first, wherefrom is suitably distanced, and has opposite and parallel vertical walls 20 and 20' of different heights.

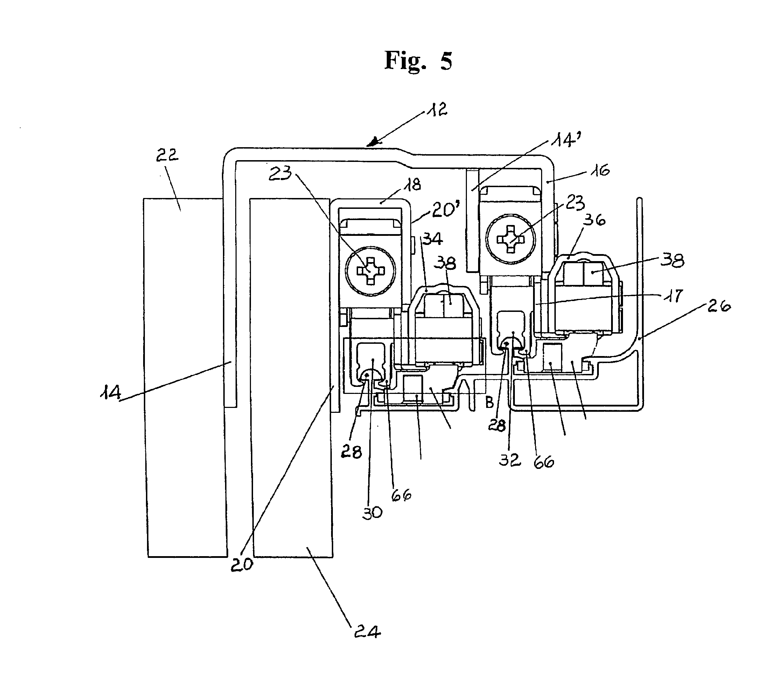

To the higher walls 14 and 20 of the frames 12 and 18 are respectively constrained, using screws or equivalent means, the upper ends of the outer door 22 and the inner door 24 of a piece of furniture or wardrobe, which comprises a plurality of said doors. The trolley 10' comprising the frames 12 and 18 supporting the doors 22 and 24, as shown in figures 1, 2 and 5, is in fact arranged at the upper end of the piece of furniture, whereas at the base of the furniture thereof sliding guides of any known type can be provided. Said trolley comprising the frames 12 and 18 is combined with an extruded section 26, shown in figure 5 and per se known, comprising, along the horizontal development portion thereof, two distanced tracks the upper longitudinally extended end thereof defines a head 28 having semicircular section. Along said tracks rollers or bearings 30, 32 slide, respectively associated to the frames 12 and 18; the rolling of the bearings 30, 32 along the semicircular head 28 of the respective tracks causes the opening or closing movement of the doors 22 and 24 fixed to the frames 12 and 18. According to the invention, the sliding guide comprising the trolley 10' with the frames 12, 18 and the relevant bearings 30, 32 is associated to a damper stop device apt to progressively slow down, at least during closing, the outer and inner doors, preventing them to abut roughly with the end stop. The damper stop device comprises an air damper, optionally a gas one, inserted in respective supports 34 and 36 consisting, for example, in metal tubulars opened at the lower front besides that on the heads and constrained near the semicircular head 28 of the tracks of the section 26.

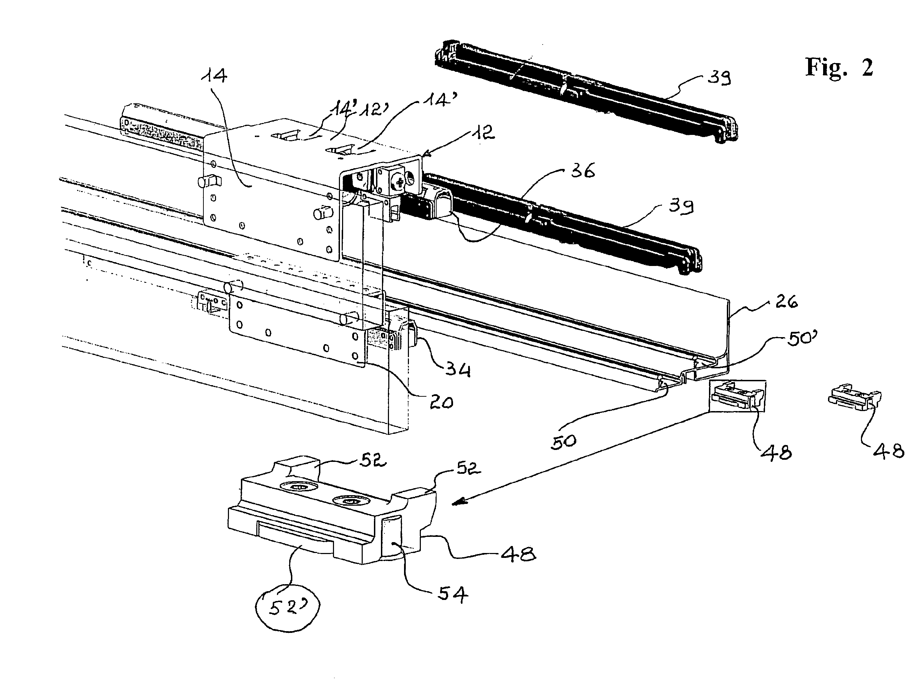

In particular, with reference to figures 1, 2 6, the planar development upper part 12' of the first frame 12 is provided with two longitudinally aligned windows wherefrom respective tabs 14', reciprocally distanced and parallel to the walls 14 and 16 of the frame thereof orthogonally bend downwards. Between the tabs 14' and the vertical wall 16 of the first frame 12 is arranged and fixed a support 15, having substantially an upturned "U" section, wherein the opposed and parallel vertical walls 17, 17' have different heights and are connected by an integral band or horizontal development upper wall 19. An identical support 15 is arranged in the second frame 18 between the vertical walls 20 and 20'. The band 19 bends downwards at 90° onto at least a head of the support 15 and defines a tab 19' having a lower or equal height than the one of the wall 17'. The tab 19' is provided with a through opening 21, shaped in a way to have a lower part narrower than the upper part. Said support 15 is provided on the opposite vertical walls 17 and 17' of slots 29 inclined and reciprocally parallel, forming with the tab 19' with the through opening 21 and with a screw 23 associated to a block 23' a device for the height adjustment of the inner door 24 that shall be described hereinafter. The device thereof, per se known on the other hand, is present as the support 15 also within the frame 18, although not shown, for the height adjustment of the outer door 22.

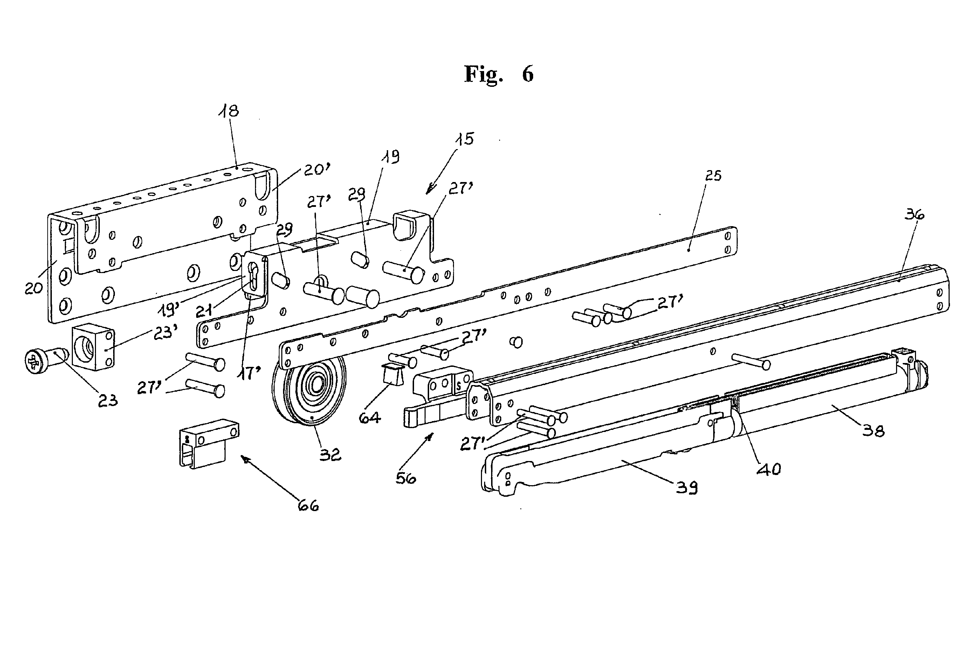

The supports consisting of the metal tubulars 36 and 38 wherein are arranged the air dampers 38 are advantageously fixed to the wall 17 of each support 15 with the interposition of a strap 25, through rivets 27 or equivalent; with similar rivets 27' the air damper 38 as well as other elements 56 and 66 as specified hereinafter are fixed to the strap thereof and to the support 15 , as is shown in figure 6, wherein for simplicity said strap 25 is shown only in association to the first frame 12.

The height adjustment device of the inner 24 and outer 22 door is activated by each screw 23 coupled to the supports 15, said screws are provided with the block 23' with threaded hole for the screws thereof, which carry on the front end a groove apt to locate itself in the narrower lower end of the through opening 21. The block 23', on the other hand, abuts the inner front of the tab 19' and is fixed to the support 15 in a known way. The screwing and unscrewing of the screw 23 makes the block 23' advance or retract and the movements thereof take place along an inclined direction, set by the orientation of the slots 29; the second frame 18 is in this way adjusted in height, thus the inner door 24, as shown in figure 6, which, as an example, regards the second frame 18 only. Each air damper, whose reference numeral is 38, is associated to a coil spring 40, as shown in the figures from 13 to 16.

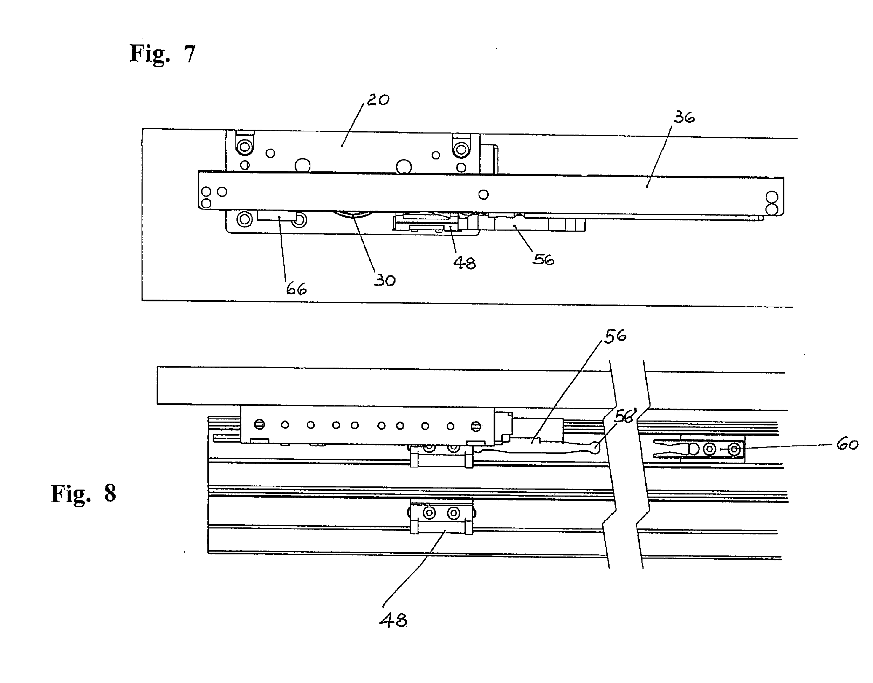

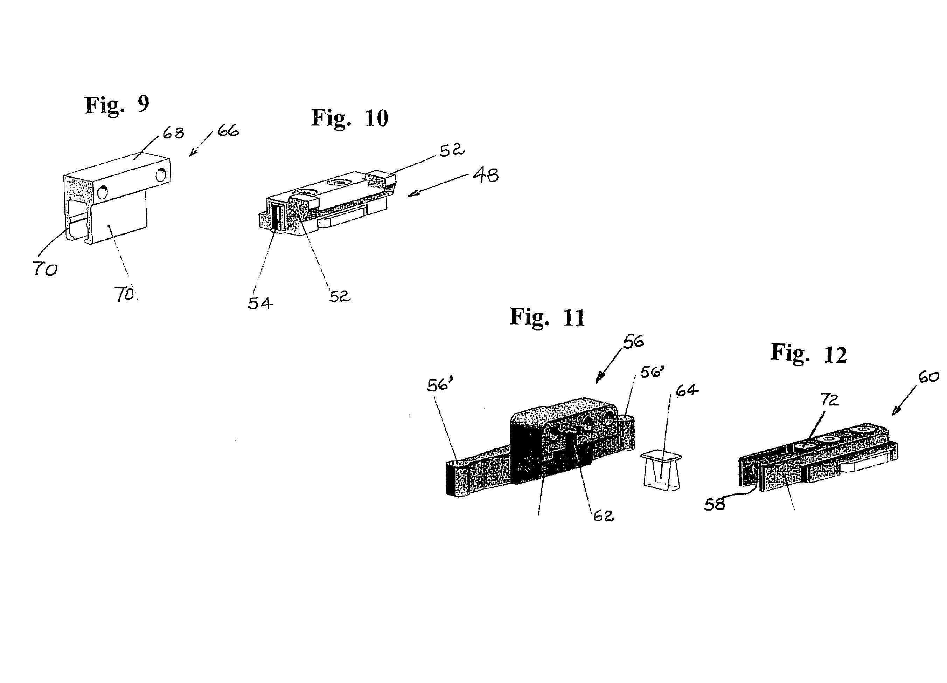

The assembly composed by the air damper 38 and the coil spring 40 extending along the damper thereof as well as an extension 39 which seats the extended stem 44, is known on the market and comprises a cursor 42, consisting of a pivoting hook fixed at the front end of the stem 44 of said damper 38. Each metal tubular forming the supports 34 and 36 seats an air damper 38 with the relevant coil spring 40, whereas the pivoting hook cursor 42 fixed at the front end of the stem 44 slides guided within a shaped slot 46, obtained within the extension 39 of the damper thereof, that is the portion wherein the stem 44 slides. The pivoting hook cursor 42 is intended to intercept an abutment, consisting in an activation unit or activator 48 shown in the figures 7, 8 and detailed in figure 10, arranged and fixed in the vicinity of one end of the section 26. In particular, an activator 48 is placed within each seat 50 and 50' of said section 26 as shown in detail in figure 2. Each activator 48 is provided, at least on one end, of an appendix 52, protruding upwards and in opposite direction from the semicircular head 28 of the tracks of the section 26; preferably, said appendix 52 is formed in correspondence of both ends or heads of activators 48, so as the latter can, if needed, be placed in the seats 50 and 50' of the section 26 and fixed thereon through a plaque 52' by means of generic screws.

From the opposed heads of each activator 48 protrudes at least in part an element in rubber or elastomeric material 54, that allows the dampening of the abutment between the activators thereof and as many supports or bumpers 56, shown in detail in figure 11, fixed to the supports 15. The bumpers 56 have opposed shaped extremities 56' in order to adapt, according to the orientation thereof, to a retaining seat 58 of a clamp spring lock 60, arranged and stabilized in correspondence of the opening end stop of the guide 10. The bumpers 56, on one side act as an abutment with one end 56' to one of the rubber elements 54 of the activators 48 and, on the other side, temporarily engage the opposed end 56' in the retaining seat 58 of the clamp locks 60, equally provided with a damper rubber 72.

In the bumper 56 is advantageously obtained a seat 62 for receiving and stabilising a brush 64 apt to constantly clean the section 26 along the head having semicircular profile 28.

A further element contributing to the optimal operation of the guide of the present invention consists in an anti-disengagement device 66, schematized in detail in figure 9 and arranged in correspondence of both the sliding tracks having semicircular head 28 of the bearings 30 and 32. In particular, said anti-disengagement devices comprise an upper block 68 with holes for the fastening through rivets or equivalent means in correspondence of the strap 25 of the respective supports 15 and a couple of integral and opposite walls 70 which extend downwards from the block 68 and which, at the lower end, have an inward bending which abuts below the semicircular head 28 of the tracks wherealong the bearings 30 and 32 slide. In this way, the accidental exit of the bearings from the tracks is avoided because the bearings thereof are not allowed to lift, but at the same time, the anti-disengagement devices 66 contribute to prevent the overriding of the activator 48 by the dampers 38 arranged in the supports 34 and 36.

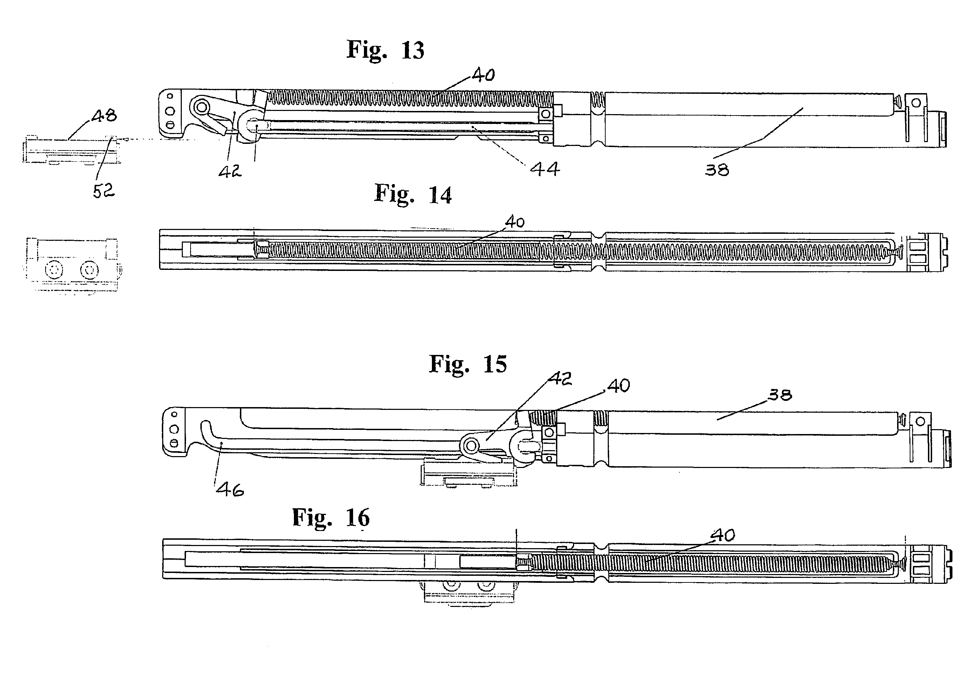

During the movement of the doors, for example during the closing of a door previously opened, the cursor 42 abuts with one of the appendixes 52 of the activator 48, follows the slot 46 pressing the stem 44 of the air damper 38 which performs the slowing down of the closing of the door. The starting situation of the closing stage of the door is schematically shown by figures 13 and 14. The spring 40, fixed to the cursor 42 and previously extended upon opening of the door, progressively contracts and performs, in cooperation and in antithesis with the damper 38 the drawing free of shocks of the door up to the natural end stop thereof. The rubber element 54 of the activator 48 avoids a rough abutment and an eventual bump of the door upon the abutment between the activator thereof and the bumper 56; in particular, further than the function performed by the anti-disengagement devices 66, the rubber element 54 contributes to prevent that an eventual bump of the door leads the door thereof to override the activator 48 and to jam in the guide. The opposed head of the bumper 56 abuts in the clamp spring lock equally provided with the damper rubber 72.

As can be noticed from the above, the advantages achieved by the invention are clear. The sliding guide for doors of wardrobes of the invention thereof guarantees reliability with regards to the damper elements, in relation thereto harmful fluid leaks cannot occur. The higher dimensions of air dampers, especially for applications on doors of significant weight, is not prejudicial for the structure of the guide as a whole, because the dampers thereof are located in an easy and innovative way in the sliding trolley rather than in the section.

The presence of elastic abutments on the activators 48 and on the bumpers 56 and the presence of the clamp lock 60 with retaining seat 58 provided with the rubber 72 guarantees contacts between the different parts free of violent impacts and free of marked noises.

Even if the invention has been described hereinbefore with particular reference to an embodiment thereof made by way of a non-limiting example, several changes and variations will appear clearly to a man skilled in the art in the light of the above description. This invention therefore is intended to include any changes and variations thereof falling within the spirit and the scope of protection of the following claims.

## Claims

1. A sliding guide (10) for doors of wardrobes provided with a damper stop comprising a trolley (10') consisting in a first frame (12) and a second frame (18) shaped like an upturned "U" whereto the upper ends of an outer door (22) and an inner door (24) of a piece of furniture are fixed, comprising also a section (26), combined with the trolley (10'), provided with two longitudinally extending seats (50-50') and two tracks the upper extremity or head (28) thereof having a semicircular section wherealong rollers or bearings (30-32) carried by the frames (12-18) slide, **characterised in that** the damper stop comprises an air or gas damper (38) fixed outside said seats (50 - 50') of the section (26).

2. The sliding guide according to Claim 1, **characterised in that** the first frame (12) comprises one or more bends at 90° downwards formed starting from the planar development upper face (12), said bends forming as many tabs (14') reciprocally distanced and parallel to the vertical walls (14-16) of the frame thereof.

3. The sliding guide according to claims 1 and 2 **characterised in that** it comprises a support (15) arranged and fixed on the top of each of the tracks having a head with semicircular profile (28).

4. The sliding guide according to Claim 3, **characterised in that** each support (15) has a section substantially like an upturned "U", wherein the opposed vertical walls (17-17') have different heights and are connected by a horizontal development upper wall (19) that bends downwards at 90° onto at least a head and defines a tab (19') provided with a through and shaped opening (21), said walls (17-17') being provided with slots (29) inclined and reciprocally parallel.

5. The sliding guide according to Claim 4, **characterised in that** the supports (15) are respectively arranged in the second frame (18) between the vertical walls (20-20') and in the first frame (12) between the vertical wall (16) and the tabs (14').

6. The sliding guide according the Claims 1 and 2, **characterised in that** each damper (38) is at least in part inserted in a support consisting of a tubular body (34-36) opened at the lower end and on the opposed heads, said tubular bodies (34-36) being fixed through rivets (27) to the supports (15) with the interposition of a strap 25.

7. The sliding guide according Claims 1 and 2, **characterised in that** it comprises an activation unit or activator (48) fixed through a plaque (52') within each seat (50-50') of the section (26) in proximity to one end thereof, provided on at least a front of an appendix (52) protruding upwards apt to abut and intercept a hook cursor (42) coupled to each damper (38) in correspondence of the extremity of the relevant stem (44) and cooperating with a coil spring (40) extended along the dampers thereof, said hook cursor (42) sliding along a shaped slot (46) obtained within the extension (39) of the dampers thereof.

8. The sliding guide according to Claim 4 **characterised in that** each activator (48) is provided, on at least one of the opposed heads wherefrom at least in part protrudes, with an element in rubber or in elastomeric material (54) intended to cooperate with an abutment unit or bumper (56) fixed to the supports (15) and/or to the strap (25).

9. The sliding guide according to Claim 8, **characterised in that** the bumper/s s (56) define opposed shaped ends (56') complementary to a retaining seat (58) of a clamp spring lock (60) arranged and stabilised in correspondence of the opening end stop of the guide thereof.

10. The sliding guide according to Claim 9, **characterised in that** each bumper (56) comprises a fixing seat (62) of a brush (64) intended to clean the section (26) sliding thereon along the semicircular profile head (28).

11. The sliding guide according to Claim 1, **characterised in that** it comprises an anti-disengagement device (66) consisting in an upper block (68) with fastening holes to the supports 15 and a couple of integral and opposed walls (70) which at the lower extremities bend inwards arranging below the head (28) of the sliding tracks of the bearings (30-32).

12. The sliding guide according Claim 9, **characterised in that** the retaining seat (58) of the clamp spring lock (60) is provided with a damper rubber (72) for the abutment to one of the shaped ends (56') of the bumper (56).

13. The sliding guide according to Claims 1 and 4, **characterised in that** it comprises a height adjustment device for each inner (22) and outer (24) door, consisting in a block (23') with threaded hole for a screw (23) which on the front end carries a groove apt to locate itself in the narrower lower end of the through opening (21) obtained on the tab (19') of each support (15) provided with slots (29) on the opposite walls (17-17').
